# EUROPEAN PATENT SPECIFICATION

(11) **EP 3 263 633 B1**
(45) Date of publication and mention of the grant of the patent: **05.01.2022**
(21) Application number: 16803106.0
(22) Date of filing: 23.05.2016
(51) Int. Cl.: B29C 35/02, B29C 35/08, B29C 43/52, B29C 70/02, B29C 70/88, B29K 105/16, B29C 43/00

(54) **CURING METHOD OF RESIN COMPOSITE MATERIAL**
HÄRTUNGSVERFAHREN FÜR HARZVERBUNDMATERIAL
PROCÉDÉ DE DURCISSEMENT DE MATÉRIAU COMPOSITE À BASE DE RÉSINE

(30) Priority: 03.06.2015 JP 2015113322
(43) Date of publication of application: 03.01.2018
(73) Proprietor: Mitsubishi Heavy Industries, Ltd., Tokyo 108-8215 (JP)
(72) Inventor: KAMIHARA, Nobuyuki, Tokyo 108-8215 (JP); ABE, Toshio, Tokyo 108-8215 (JP)
(74) Representative: Henkel & Partner mbB
(86) International application number: PCT/JP2016/065139
(87) International publication number: WO 2016/194671

(56) References cited:
- EP-A1- 0 596 996
- EP-A1- 2 687 557
- EP-A2- 2 112 192
- WO-A1-2009/127864
- WO-A1-2014/025360
- WO-A2-2009/138782
- DE-A1-102010 052 180
- JP-A- S6 434 733
- JP-A- H03 182 309
- JP-A- H06 226 741
- JP-A- S62 117 731
- JP-A- 2013 091 728
- JP-A- 2013 091 728
- US-A1- 2010 209 690
- US-A1- 2011 284 691

## Description

### Technical Field

The present invention relates to a curing method of a resin composite material.

### Background Art

A reinforced resin composite material (fiber reinforced plastic) obtained by impregnating a fibrous reinforcing material such as glass fibers or carbon fibers into a matrix resin is a lightweight material having high strength and high elasticity and is widely used in an aerospace industry, an automobile industry, sports equipment, or the like.

As the matrix resin of the resin composite material, a thermosetting resin or a thermoplastic resin is suitably used since the resins have a short curing time and high productivity. In recent years, an intermediate molding material is frequently used, which is referred to as a flexible prepreg which is semi-cured by impregnating a thermosetting or thermoplastic matrix resin to a mat-shaped fibrous reinforcing material.

In general, as described in PTL 1, in a case where a resin molded article is molded by a prepreg, the prepreg is laminated or wound on a molding tool, a jig, or the like of a manufactured molded resin article to be molded into a predetermined shape, and the prepreg is enclosed by a vacuum bag so as to be evacuated in order to increase adhesion with respect to the molding tool, the jig, or the like. Thereafter, the prepreg is accommodated in a heater such as an autoclave, and the matrix resin of the prepreg is cured while being heated, pressurized, and degassed.

PTL 2 discloses an adhesive agent which bonds two adherends in which at least one of the two adherends is formed of a resin material, and the adhesive agent contains microwave absorbing substances configured carbon black or SiC. The adhesive agent is self-heated by irradiating the adhesive agent with microwaves after the bonding, and the adhesive agent is cured by the heat. Accordingly, the adhesive agent may be used as a matrix resin in the resin composite material.

PTL 3 discloses a method for selectively heating a composite structure formed of an electrically non-conductive material such as a thermoplastic resin reinforced with electrically conductive fibers such as carbon fibers by adding a preferential heating material to said composite structure, and then subjecting the composite structure to an external magnetic field induced at a frequency of from 3 kHz to 7 MHz. Preferably, the preferential heating material is magnetic and electrically non-conductive, wherein one example of such magnetic and electrically non-conductive preferential heating material comprises magnetic oxide.

PTL 4 discloses a method of connecting a first material to a second material by means of a heat-activatable adhesive material in aircraft construction, wherein the adhesive material is arranged between the first material and the second material and an induction heat which is adequate to activate the adhesive material is generated, wherein the first material and/or the second material and/or the adhesive material have an induction heat-generating means, and wherein the first material and/or the second material may comprise a fiber-reinforced plastic. As the induction heat-generating means, metallic nanoparticles such as nanoferrites can be used.

PTL 5 discloses a composite plastic component comprising at least one textile insert subjected to injection-molding with a thermoplastic matrix material, wherein the thermoplastic matrix material comprises nanoparticles formed from a ferromagnetic material, or/and wherein the textile insert includes electrically conductive wires which have a defined length and cross-section and which are unidirectionally or bidirectionally integrated into the textile insert.

PTL 6 discloses a carbon fiber-reinforced plastic, comprising a polymeric matrix, at least one carbon fiber in the polymeric matrix, an energetic polymer interface located between a surface of the carbon fiber and the polymeric matrix, and a microwave receptive additive in contact with the energetic polymer interface. The microwave receptive additive may be a metal such as gold, and may be provided in the form of nanoparticles.

PTL 7 discloses a self-reinforced plastics material produced from a mixture of first grade of plastics material and a second grade of plastics material, wherein the first grade of plastics material is selectively heatable and is provided in the form of fibers. Preferably, the first grade of plastics material comprises an additive that absorbs applied radiation, wherein the additive may be metal particles or nanosized barium ferrite.

PTL 8 discloses a carbon fiber-reinforced plastic having carbon fibers dispersed in a matrix resin, wherein the carbon fibers are provided in the form of a woven cloth or a non-woven cloth and the matrix resin is a thermosetting resin having metal nanoparticles dispersed therein. The thermosetting resin is cured by irradiating the same with light have a wavelength of from 200 to about 800 nm.

PTL 9 discloses a carbon fiber-reinforced composite material comprising a thermosetting epoxy resin matrix and carbon fibers dispersed therein, particles of magnetite, and optionally particles of a conductive carbon material such as graphite powder or carbon nanotubes. Preferably, the particles of magnetite have a size of from 5 to 100 nm, and are provided in an amount of from 1 to 5% by volume of the resin.

PTL 10 discloses a prepreg which is in the form of a sheet and comprises a matrix resin in which a plurality of carbon fibers is dispersed. The matrix resin comprises a thermosetting resin, a curing agent, conductive particles having a diameter of ≤ 1 µm, conductive particles having a diameter of ≥ 5 µm, and thermoplastic resin particles, wherein the conductive particles having a diameter of ≤ 1 µm may be metal particles.

PTL 11 discloses electrically conductive, thermosetting compositions for use in surfacing films and adhesives, which surfacing films may be incorporated into a composite structure of an aircraft so as to provide lighting strike protection (LSP) and electromagnetic interference (EMI) shielding. The electrically conductive composition comprises about 10 to 60% by weight of one or more thermosetting resins, about 0.5 to 30% by weight of one or more curing agents, and about 2 to 70% by weight of one or more conductive additives. As examples of the conductive additive, carbon fibers and metal nanowires are mentioned.

PTL 12 discloses a composite member featuring controlled conduction pathways to overcome non-linear responses in frequency space. The composite member comprises a binder polymer and a plurality of continuous filaments disposed within the binder polymer to provide a primary electric conduction length, wherein the plurality of continuous filaments are further interlinked in a manner to create a secondary electric conduction path that controls a current level that is translated through the composite member. Preferably, the composite member further comprises one or more conductive fillers such as nanotubes, nanorods, nanowires or nanofibers.

### Citation List

### Patent Literature

[PTL 1] Japanese Patent Application Publication No. JP 2011-152753 A
[PTL 2] Japanese Patent Application Publication No. JP 2008-156510 A
[PTL 3] European Patent Application Publication No. EP 0 596 996 A1
[PTL 4] United States Patent Application Publication No. US 2011/284691 A1
[PTL 5] German Patent Application Publication No. DE 10 2010 052180 A1
[PTL 6] International Patent Application Publication No. WO 2014/025360 A1
[PTL 7] International Patent Application Publication No. WO 2009/127864 A1
[PTL 8] Japanese Patent Application Publication No. JP 2013-091728 A
[PTL 9] International Patent Application Publication No. WO 2009/138782 A2
[PTL 10] European Patent Application Publication No. EP 2 687 557 A1
[PTL 11] United States Patent Application Publication No. US 2010/209690 A1
[PTL 12] European Patent Application Publication No. EP 2 112 192 A2

### Summary of Invention

### Technical Problem

In PTL 1, in a case where the resin composite material such as the prepreg is heated along with a molding tool, a jig, a vacuum bag, or the like by a heater such as an autoclave, a plurality of heaters are required to be prepared according to the size or the shape of a molded resin article to be molded, and the manufacturing costs of the molded resin article increase.

In addition, when the resin composite material is heated by the heater, it is not possible to increase the temperature of the resin composite material if not only the resin composite material but also all portions including the molding tool, the jig, or the like are not heated. Accordingly, a heating process takes a long period of time, and energy consumed for the heating is excessive.

In PTL 2, even when the microwave absorbing substances formed of carbon black or SiC is contained in the matrix resin in the resin composite material, a self heating value of the carbon black or SiC when irradiated with microwaves is at most approximately 70°C to 100°C, it is not sufficient to increase the temperature of the entire resin composite material along with the temperature of the molding tool, the jig, or the like, which is not practical. Moreover, since the carbon black or SiC has low heat-generation properties, a mixing amount thereof to a resin is relatively large. Accordingly, the mixing amount of materials different from each other increases, and there is a concern that strength of the matrix resin and strength of the resin composite material decrease.

The present invention is made in consideration of the above-described circumstances, and an object thereof is to provide a resin composite material, a curing method thereof, and a molded resin article capable of simplifying equipment for heating a thermosetting resin or a thermoplastic resin and reducing manufacturing costs of the molded resin article by saving energy.

### Solution to Problem

The object is achieved by the subject-matter defined in the claims. More specifically, the present invention relates to a method of curing a resin composite material as defined in claim 1. The curing method includes:
a lamination step of laminating a resin composite material on the molding tool;
an electromagnetic wave irradiation step of irradiating the resin composite material laminated on the molding tool with electromagnetic waves to heat the resin composite material; and
a pressurization step of pressurizing the surface of the heated resin composite material,
wherein the resin composite material is formed by combining a fibrous reinforcing material and a thermosetting or thermoplastic matrix resin,
wherein a metal nanomaterial which absorbs electromagnetic waves and self-heats is added to the matrix resin,
wherein the metal nanomaterial is nanofibers or nanocoils, and
wherein, in a case where the metal nanomaterial is nanofibers, the nanofibers are manufactured using an electro-spinning method, or, in a case where the metal nanomaterial is nanocoils, the nanocoils are obtained by setting nanofibers manufactured using an electro-spinning method as core portions and forming metal films on the surface of the nanofibers.

If the resin composite material is irradiated with the electromagnetic waves, metal nanomaterial added to the matrix resin absorbs the electromagnetic waves and self-heats. This heat is transmitted to the matrix resin to heat the resin and the matrix resin which is a thermosetting or thermoplastic resin is softened.

In a case where the matrix resin is a thermosetting resin, a curing reaction is generated by pressurization in this state, and the resin composite material is cured. Meanwhile, in a case where the matrix resin of the resin composite material is a thermoplastic resin, the resin composite material is cured by cooling the thermoplastic resin.

Accordingly, unlike the related art, it is not necessary to accommodate the resin composite material to be cured in a storage type heater such as an autoclave and the storage type heater is not required. Therefore, it is possible to greatly simplify the heating equipment and reduce the manufacturing costs of a molded resin article.

In addition, since only the matrix resin is heated by the irradiation of the electromagnetic waves, unlike a case where the heater of the related art is used, energy for heating all portions including the molding tool, the jig, or the like is not required. Accordingly, it is possible to save energy. Therefore, it is possible to reduce the manufacturing costs of the molded resin article.

In addition, since it is possible to locally heat the resin composite material by limiting irradiation ranges of the electromagnetic waves, an addition can be provided or additional molding or additional processing can be performed by locally heating the molded resin article again after curing the entire molded resin article.

In the resin composite material subjected to the curing method of the present invention, the metal nanomaterial is nanofibers or nanocoils. According to the metal nanomaterial having the shape, since the metal nanomaterial is formed in thin metal wire shapes which are oriented in many directions, particularly, the electromagnetic wave absorption efficiency becomes high. Accordingly, it is possible to rapidly increase the temperature of the matrix resin.

In addition, since it is possible to decrease an addition amount of the metal nanomaterial, it is possible to decrease occurrence of cracks in the matrix resin and prevent strength of the resin composite material from being decreased.

In the resin composite material subjected to the curing method of the present invention, preferably, frequencies of the electromagnetic waves are 3 MHz to 3 GHz. In the metal nanomaterial, absorption efficiency of the electromagnetic waves having the frequencies is high. In addition, since the frequency range is an electromagnetic wave frequency band which does not require a special management, it is possible to emit the electromagnetic waves by a simple device.

In the resin composite material subjected to the curing method of the present invention, preferably, the material of the metal nanomaterial is platinum or gold. Accordingly, even when a manufacturing process of the metal nanomaterial is performed under an oxidizing atmosphere, the platinum or the gold is not easily oxidized. In addition, even when the platinum or the gold is oxidized, the oxide has conductivity. Accordingly, it is possible to manufacture the metal nanomaterial having high electromagnetic wave absorption efficiency.

In the resin composite material subjected to the curing method of the present invention, preferably, an addition amount of the metal nanomaterial with respect to the matrix resin is 2 µg/cm² to 50 µg/cm² in terms of a weight ratio per unit area. By setting the addition amount of the metal nanomaterial to the range, self-heating properties sufficient for performing the heat curing are applied to the matrix resin, it is possible to prevent occurrence of cracks or the like generated due to the excessive addition amount of the metal nanomaterial, and it is possible to prevent strength of the resin composite material from being decreased.

In the resin composite material subjected to the curing method of the present invention, the fibrous reinforcing material may be a planar shape in which fibers are woven to be arranged in one direction and the matrix resin may be attached to the fibrous reinforcing material to form the resin composite material in a flexible sheet shape. In this case, the matrix resin may be also formed in a planar shape to overlap the fibrous reinforcing material, or the matrix resin may be made into a powder state or a particle state to be attached to the fibrous reinforcing material to cover the fibrous reinforcing material.

In the resin composite material subjected to the curing method of the present invention, the fibrous reinforcing material may be a planar shape in which fibers are woven to be arranged in two directions and the matrix resin may be attached to the fibrous reinforcing material to form a flexible sheet shape. In this way, since the fibrous reinforcing materials are woven to be arranged in two directions, it is possible to improve the strength of the fibrous reinforcing material and the strength of the resin composite material.

In the resin composite material subjected to the curing method of the present invention, the fibrous reinforcing material may be formed in a linear shape and the matrix resin may be attached to the fibrous reinforcing material to form the resin composite material in a flexible thread shape (or a rope shape). In this case, the matrix resin may be formed in a linear shape to be twisted with the fibrous reinforcing material, or the matrix resin may be made into a powder state or a particle state to be attached to the fibrous reinforcing material to cover the fibrous reinforcing material.

In the resin composite material subjected to the curing method of the present invention, the fibrous reinforcing material and the matrix resin may be formed in a linear shape and the fibrous reinforcing material and the matrix resin may be combined with each other to form the resin composite material in a flexible thread shape.

In the resin composite material subjected to the curing method of the present invention, the fibrous reinforcing material and the matrix resin may be formed in a linear shape and the fibrous reinforcing material and the matrix resin may be knitted to each other to form the resin composite material in a flexible woven fabric shape. In this case, the fibrous reinforcing material and the matrix resin may be formed in band shapes to be knitted to each other.

In this way, since the resin composite material is formed in a sheet shape, a thread shape, a rope shape, or a woven fabric shape, it is possible to mold the molded resin article having various shapes by appropriately selecting the resin composite material. In the resin composite material, since the metal nanomaterial is included in the matrix resin, by irradiating the resin composite material with electromagnetic waves, resin composite material is thermally cured in a molded form.

According to the resin composite material having the shape, the resin composite material can be laminated using a known lamination method, that is, a lamination method which is manually performed or a lamination method which is performed by an automatic laminating machine.

Accordingly, in the curing method of the present invention, by laminating the resin composite material on the molding tool in the lamination step, irradiating the resin composite material with the electromagnetic waves in the electromagnetic wave irradiation step, and pressurizing the surface of the resin composite material in the pressurization step, it is possible to mold the resin composite material, and it is possible to cure the matrix resin. Accordingly, a heater capable of accommodating all laminated resin composite materials is not required, and it is possible to increase the temperatures of all laminated resin composite materials to thermally cure the resin composite materials.

In the curing method of the present invention, the lamination step may be performed a plurality of times, and the electromagnetic wave irradiation step may be performed for each lamination step.

According to this curing method, the resin composite material is irradiated with the electromagnetic waves each time the resin composite material is laminated once. That is, the lamination and the heating of the resin composition material are alternately repeated. Accordingly, it is possible to reliably cure each of the laminated resin composite materials.

### Advantageous Effects of Invention

As described above, according to the curing method of the present invention, it is possible to simplify equipment for heating a thermosetting resin or a thermoplastic resin and reduce manufacturing costs of the molded resin article by saving energy. In addition, the manufacturing costs of a molded resin article manufactured by the curing method of the present invention are inexpensive.

### Brief Description of Drawings

Fig. 1A shows a longitudinal sectional view of an uncured prepreg formed in a sheet shape as used in a first embodiment of the present invention.
Fig. 1B shows a longitudinal sectional view of the uncured prepreg formed in a sheet shape as used in the first embodiment of the present invention.
Fig. 1C shows a longitudinal sectional view of the uncured prepreg formed in a sheet shape as used in the first embodiment of the present invention.
Fig. 1D shows a longitudinal sectional view of the uncured prepreg formed in a sheet shape as used in the first embodiment of the present invention.
Fig. 1E shows a longitudinal sectional view of the uncured prepreg formed in a sheet shape as used in the first embodiment of the present invention.
Fig. 1F is a longitudinal section view of the prepreg after molding.
Fig. 2 is a SEM image showing an example of nanofibers.
Fig. 3 is a SEM image showing an example of nanocoils.
Fig. 4 is an enlarged SEM image of the nanocoils.
Fig. 5 is a flowchart showing a curing method according to the present invention.
Fig. 6 is a view showing a state where an uncured prepreg is laminated on a molding tool.
Fig 7 is a view showing a state where the prepreg is enclosed along with the molding tool by a vacuum bag.
Fig. 8 is a schematic view for explaining an electromagnetic wave irradiation method by an electromagnetic wave irradiation chamber.
Fig. 9 is a schematic view for explaining an electromagnetic wave irradiation method by an electromagnetic wave irradiator.
Fig. 10A shows a longitudinal sectional view of an uncured prepreg formed in a thread shape as used in a second embodiment of the present invention.
Fig. 10B shows a longitudinal sectional view of the uncured prepreg formed in a thread shape as used in the second embodiment of the present invention.
Fig. 10C shows a longitudinal sectional view of an uncured prepreg formed in a woven fabric shape as used in the second embodiment of the present invention.

### Description of Embodiments

Hereinafter, embodiments of the present invention will be described with reference to the drawings.

### [First Embodiment]

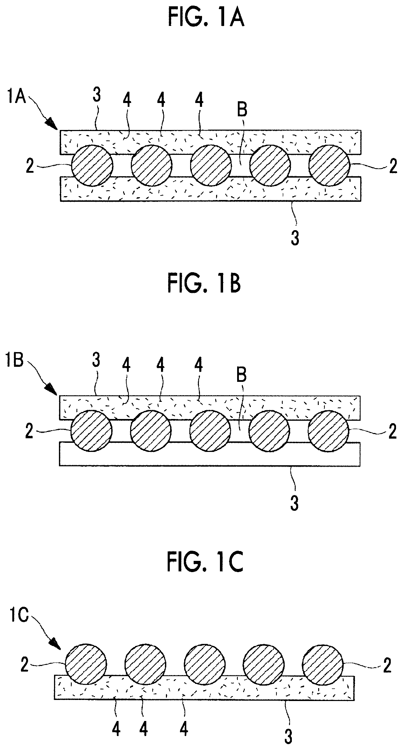

Figs. 1A to 1E are longitudinal sectional views showing each aspect of an uncured prepreg (resin composite material) according to a first embodiment. As is well known, each of prepregs 1A to 1E is a flexible intermediate molding material which is formed in a flexible sheet shape obtained by attaching thermosetting or thermoplastic matrix resins 3 to a mesh-shaped fibrous reinforcing material 2 such as glass fibers or carbon fibers to be semi-integrated.

For example, the material of the matrix resin 3, there is polyether ether ketone (PEEK), polyethylene terephthalate (PET), polybutylene terephthalate (PBT), nylon 6 (PA6), nylon 66 (PA66), polyphenylene sulfide (PPS), polyetherimide (PEI), polyether ketone ketone (PEKK), or the like.

Metal nanomaterials 4 which absorb electromagnetic waves and self-heat are added to the matrix resin 3. Each of the "metal nanomaterial" is a metal material in which a two-dimensional size or three-dimensional size is nanoscale (one to several hundred nm). Specifically, the metal nanomaterials 4 to be used in the invention are nanofibers (cross-sectional diameters are nanoscale) or nanocoils (cross-sectional diameters are nanoscale and shapes in a longitudinal direction are formed in coil shapes) since the nanocoils or the nanofibers have high electromagnetic wave absorption efficiency.

The materials of the metal nanomaterials 4 are not particularly limited, and preferably, the material of each of the metal nanomaterials is a metal which has high electromagnetic wave absorption efficiency in frequencies of emitted electromagnetic waves. Specifically, the material of the metal nanomaterial is platinum (Pt), gold (Au), nickel (Ni), copper (Cu), or the like. In a forming process of the nanocoils or nanofibers, a metal is oxidized. Platinum or gold is not easily oxidized, and even in a case where the platinum or gold is oxidized, since the platinum or gold is a material having conductivity, the platinum or gold is optimal as a nanomaterial.

In a case where an addition amount of the metal nanomaterials 4 with respect to the matrix resin 3 is large, there is a concern that cracks occur when each of the prepregs 1A to 1E is used as a molded resin article. Accordingly, the addition amount of the metal nanomaterials 4 with respect to the matrix resin 3 is 50 µg/cm² or less, preferably 10 µg/cm² or less, and more preferably 2 µg/cm² or less in terms of a weight ratio per unit area. Since the above-described nanomaterials have high electromagnetic wave absorption efficiency, even when the addition amounts thereof are small, it is possible to obtain large heating value.

For example, the prepreg 1A shown in Fig. 1A, sheet-shaped matrix resins 3 are attached to both surfaces of the sheet-shaped fibrous reinforcing materials 2, and metal nanomaterials 4 are added to both of two matrix resins 3. As the prepreg 1B shown in Fig. 1B, the metal nanomaterials 4 may be added to only one matrix resin 3. In addition, as the prepreg 1C shown in Fig. 1C, the sheet-shaped matrix resin 3 to which the metal nanomaterials 4 are added may be provided on only one surface of the fibrous reinforcing material 2.

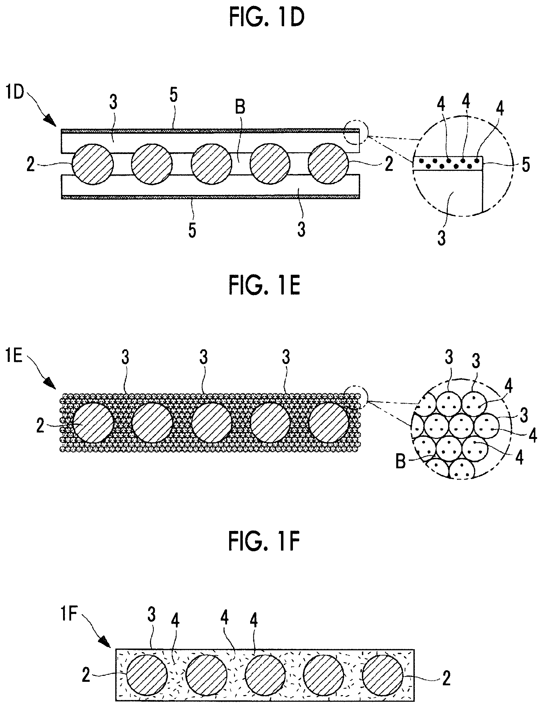

In the prepreg 1D shown in Fig. 1D, sheet-shaped matrix resins 3 to which the metal nanomaterials 4 are not added are attached to both surfaces of the sheet-shaped fibrous reinforcing material 2. In addition, thin resin sheets 5 which are formed of the resin materials similar to those of the matrix resin 3 and to which the metal nanomaterials 4 are added are bonded to both surfaces (or one surface) of the prepreg 1D. According to this structure, it is possible to easily change the existing prepreg to which the metal nanomaterials 4 are not added to a prepreg to which the metal nanomaterials 4 are added.

In the prepreg 1E shown in Fig. 1E, matrix resins 3 which are powdery shapes, particulate shapes, linear shapes, fibrous shapes, or the like containing metal nanomaterials 4 are attached to cover the sheet-shaped fibrous reinforcing material 2. In this case, particles of the matrix resins 3 which contain the metal nanomaterials 4 and particles of the matrix resins 3 which do not contain the metal nanomaterials 4 may be mixed with each other.

All the prepregs 1A to 1E shown in Figs. 1A to 1E contain bubbles B, the bubbles B are extracted by pressurization during molding, and the prepregs 1A to 1E have longitudinal cross sections shown in Figs. 1F.

In the invention, metal nanofibers are manufactured using an electro-spinning method.

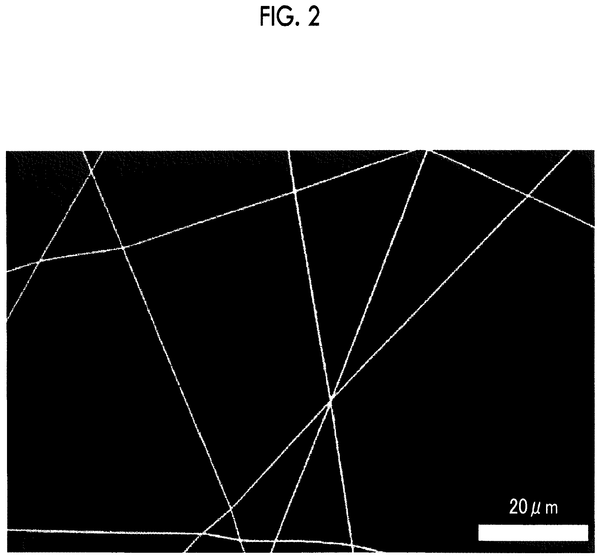

The metal acetate is dissolved in a polymer solution (for example, polyvinyl alcohol aqueous solution) the obtained solution is sprayed onto the substrate by the electro-spinning method to form nanofibers containing the metal. The obtained nanofibers are heat-treated in a reducing atmosphere to obtain the metal nanofibers (refer to Fig. 2).

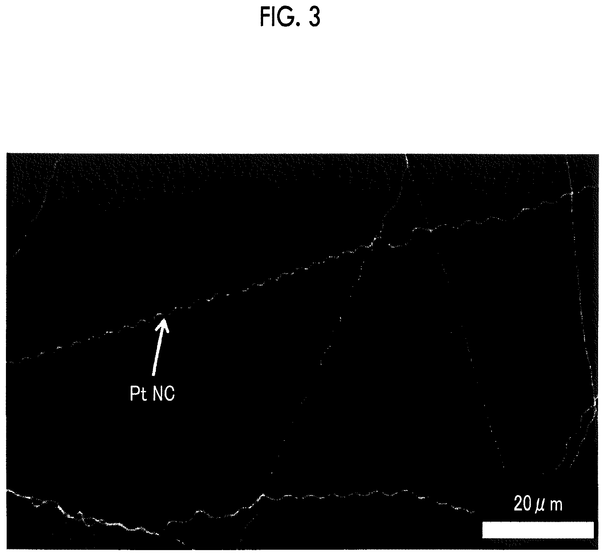

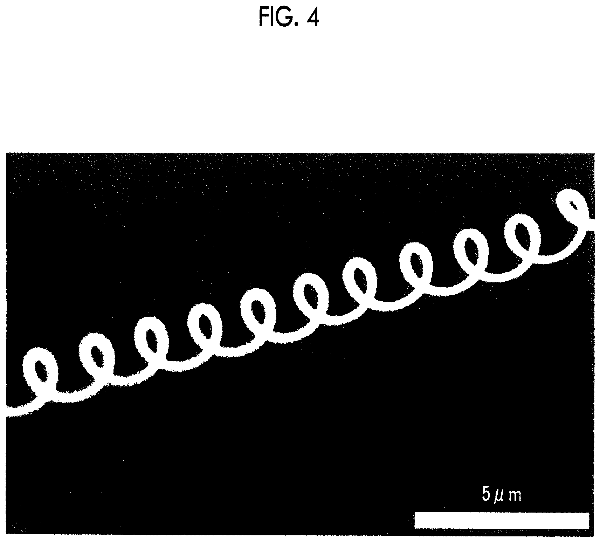

Metal nanocoils are obtained by setting nanofibers manufactured using an electro-spinning method as core portions and forming metal films on the surfaces of the nanofibers. In this case, the core portions may be metal materials or may be polymer materials. The nanocoils may be solid or hollow. As a method for forming hollow nanocoils, there is a method of forming metal films using the core portions of the polymer materials, and thereafter, performing heat treatment on the metal films to evaporate the polymer materials (refer to Figs. 3 and 4).

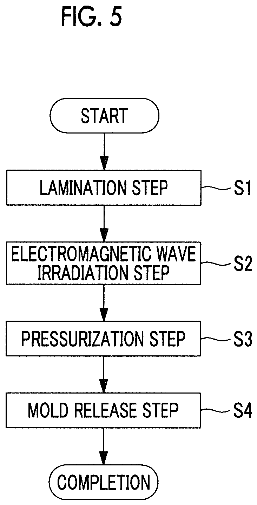

Curing methods of the sheet-shaped prepregs 1A to 1E are performed as follows. In addition, Fig. 5 is a flowchart showing the curing methods (steps) of the prepregs 1A to 1E.

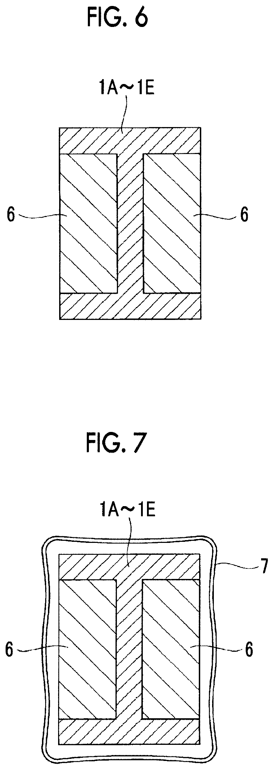

First, as shown in Fig. 6, each of the uncured prepregs 1A to 1E is laminated (placed, wound, or the like) on a molding tool 6, jig, or the like to be molded into a predetermined shape (lamination step S1).

Next, as shown in Fig. 7, each of the prepreg 1A to 1E is enclosed by a vacuum bag 7 along with the molding tool (jig) 6. The steps until this are similar to those of the general curing method.

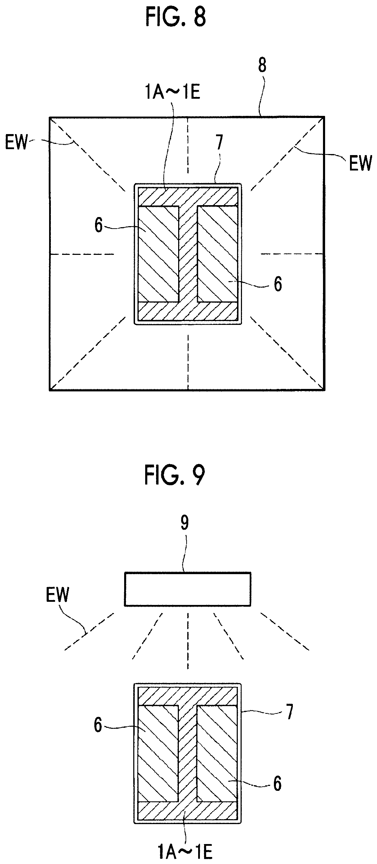

Next, as shown in Fig. 8, each of the prepregs 1A to 1E is irradiated with electromagnetic waves EW (electromagnetic wave irradiation step S2). The frequencies of the electromagnetic waves EW are not limited. However, for example, preferably, the electromagnetic waves EW are electromagnetic waves which do not require special managements unlike X-rays which requires special managements. In addition, preferably, the electromagnetic waves EW are electromagnetic waves having frequencies in which frequency absorption efficiency is high with respect to the metal configuring the metal nanomaterials 4. Considering the above, preferably, short waves (HF, 3 MHz to 30 MHz), ultrashort waves (VHF, 30 MHz to 300 MHz), and microwaves (300 MHz to 3 GHz) are emitted. Specifically, electromagnetic waves of an ISM band can be used. The molding tool (jig) 6, the vacuum bag 7, or the like is required to be formed of a material through which electromagnetic waves EV can pass.

As the irradiation method of the electromagnetic waves EW, in a state where the prepregs 1A to 1E accommodated in the vacuum bag 7, the prepregs 1A to 1E may be accommodated in an electromagnetic wave irradiation chamber 9 so as to be irradiated with the electromagnetic waves EW, or as shown in Fig. 9, an electromagnetic wave irradiator 8 may be installed around the prepregs 1A to 1E to irradiate the prepregs 1A to 1E with electromagnetic waves EW. However, other methods may be used, and the irradiation method of the electromagnetic waves EW is not particularly limited. In a case where the electromagnetic wave irradiator 9 shown in Fig. 9 is used, preferably, each of the prepregs 1A to 1E can be not only entirely irradiated with the electromagnetic waves EW but also locally irradiated with the electromagnetic waves EW.

If the prepreg 1A to 1E are irradiated with the electromagnetic waves EW, metal nanomaterials 4 added to the matrix resins 3 shown in Figs. 1A to E absorb the electromagnetic waves EW and self-heat. This heat is transmitted to the matrix resins 3 and the matrix resins 3 are softened and melted.

Next, the vacuum bag 7 is evacuated to increase adhesion of the molding tool (jig) 6 with respect to each of the prepregs 1A to 1E. In this case, since a negative pressure can be applied to the vacuum bag 7, each of the prepreg 1A to 1E is pressurized in a thickness direction thereof, and bubbles B included in each of the prepregs 1A to 1E are extracted by the pressure (pressurization step S3) .

In a case where the matrix resin 3 of each of the prepregs 1A to 1E is a thermosetting resin, a curing reaction is generated by the pressurization of each of the heated prepregs 1A to 1E, and each of the prepregs 1A to 1E is cured. In a case where the matrix resin 3 is a thermoplastic resin, if the irradiation of the electromagnetic waves EW is completed, the matrix resin 3 is cooled to be cured, and each of the prepregs 1A to 1E is cured.

In any of the above cases, the cross section of each of the prepregs 1A to 1E has the longitudinal cross section shown in Fig. 1F. An irradiation amount and a curing time of the electromagnetic waves EW are appropriately set such that the matrix resins 3 are softened or melted to come into close-contact with the molding tool 6, the bubbles B are extracted, and the shape of the molded resin article is maintained in a state where the matrix resins 3 do not flow out from the fibrous reinforcing materials 2.

In general, the lamination step S1 is performed a plurality of times. That is, in each of the sheet-shaped prepregs 1A to 1E, a plurality of prepregs are laminated and the thickness of the molded resin article is secured. In a case where the lamination steps S1 is performed a plurality of times, preferably, the electromagnetic wave irradiation step S2 is performed for each lamination step S1. Alternatively, the electromagnetic wave irradiation step S2 may be performed once each time the lamination step S1 is performed two or three times.

If each of the prepregs 1A to 1E is cured by the irradiation of the electromagnetic waves EW and the pressurization and the molded resin article is formed, the formed molded resin article is extracted from the vacuum bag 7 to be separated from the molding tool (jig) 6 or the like, and the molded resin article is completed (mold release step S4).

According to the prepregs 1A to 1E and the curing methods thereof, each of the prepregs 1A to 1E is irradiated with the electromagnetic waves EW, and thus, the metal nanomaterials 4 added to the matrix resins 3 absorb the electromagnetic waves EW and self-heat. This heat is transmitted to the matrix resins 3 and the matrix resins 3 which are thermosetting or thermoplastic are cured.

Accordingly, unlike the related art, it is not necessary to accommodate the prepregs 1A to 1E to be cured in a storage type heater such as an autoclave and the storage type heater is not required. Therefore, it is possible to greatly simplify the heating equipment and reduce the manufacturing costs of the molded resin article.

In addition, since only the matrix resins 3 are heated by the irradiation of the electromagnetic waves EW, unlike the heater of the related art, energy for heating all portions including the molding tool, the jig, or the like is not required. Accordingly, it is possible to save energy. Therefore, it is possible to reduce the manufacturing costs of the molded resin article.

In addition, since it is possible to locally heat each of the prepregs 1A to 1E by limiting the irradiation ranges of the electromagnetic waves EW, by locally heating the molded resin article after curing the entire molded resin article, an addition can be provided or additional molding or additional processing can be performed.

Each of the prepregs 1A to 1E which are formed in sheet shapes can be laminated by a known lamination method, that is, a lamination method which is manually performed or a lamination method which is performed by an automatic laminating machine.

As described above, if the electromagnetic wave irradiation step S2 is performed every time the laminating step S1 is performed a plurality of times, the electromagnetic waves EW are emitted a plurality of times while the prepregs 1A to 1E are laminated and after the prepregs 1A to 1E are laminated. That is, the lamination and the heating of the prepregs 1A to 1E are alternately repeated. Accordingly, it is possible to reliably cure each of the laminated prepregs 1A to 1E.

Since the metal nanomaterials 4 are nanofibers or nanocoils, and the metal nanomaterials 4 are formed in thin metal wire shapes which are oriented in many directions, particularly, the electromagnetic wave absorption efficiency becomes high. Accordingly, it is possible to rapidly increase the temperatures of the matrix resins 3.

In addition, since it is possible to decrease the addition amount of the metal nanomaterials 4, it is possible to decrease occurrence of cracks in the matrix resin 3 and prevent strength of the resin composite material from being decreased.

By selecting the frequencies of the electromagnetic waves EW for allowing the metal nanomaterials 4 to self-heat from the range of 3 MHz to 3 GHz, it is possible to the absorption efficiency of the electromagnetic waves EW. In addition, since the frequency range is an electromagnetic wave frequency band which does not require a special management, it is possible to emit the electromagnetic waves by a simple device and it is possible to increase a degree of freedom of a place of construction, or the like.

Since the material of the metal nanomaterial 4 is platinum (Pt) or gold (Au), even when a manufacturing process of the metal nanomaterial 4 is performed under an oxidizing atmosphere, the platinum or the gold is not easily oxidized, and since an oxide has conductivity, it is possible to manufacture the metal nanomaterials 4 having high electromagnetic wave absorption efficiency.

By setting the addition amount of the metal nanomaterials 4 with respect to the matrix resins 3 to 50 µg/cm² or less, preferably 10 µg/cm² or less, and more preferably 2 µg/cm² or less in terms of a weight ratio per unit area, self-heating properties sufficient for performing the heat curing are applied to the matrix resins 3, it is possible to prevent occurrence of cracks or the like generated due to the excessive addition amount of the metal nanomaterials 4, and it is possible to prevent strength of the resin composite material from being decreased.

### [Second Embodiment]

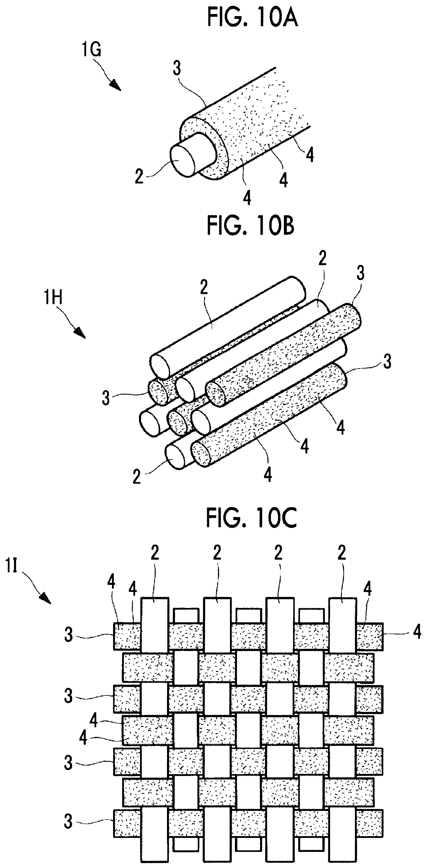

Figs. 10A to 1C are views showing uncured prepregs which are formed in shapes different from a sheet shape according to a second embodiment. Similarly to the prepregs 1A to 1E of the first embodiment, each of prepregs 1G to 1I is a flexible intermediate molding material which is formed by attaching the thermosetting or thermoplastic matrix resin 3 to the fibrous reinforcing material 2 such as glass fibers or carbon fibers to be semi-integrated.

In the prepreg 1G shown in Fig. 10A, the fibrous reinforcing material 2 is formed in a linear shape, the matrix resin 3 is attached around the fibrous reinforcing material 2, and a flexible thread shape (or rope shape) is formed.

In this case, the matrix resin 3 may be made into a powder state to cover the fibrous reinforcing material 2, or may be made into a gel state or a semi-liquid state to be applied to the fibrous reinforcing material 2.

The properties or the characteristics of the metal nanomaterials 4 added to the matrix resin 3 are similar to those of the first embodiment.

In this way, the prepreg 1G formed in a flexible thread shape or a rope shape is wound on the molding tool, the jig, or the like of the molded resin article, and the prepreg G can be laminated on even a complicated curved surface or protrusion-shaped surface without difficulty. In addition, the application of the prepreg G is not limited to the surface, and the prepreg G easily fills a recessed portion, a hole, or the like. Accordingly, it is possible to improve moldability of the molded resin article.

The prepreg 1H shown in Fig. 10B is a formed in a flexible thread shape (commingling material shape) by combining the fibrous reinforcing materials 2 and the matrix resins 3 formed in linear shapes. The properties or the characteristics of the metal nanomaterials 4 added to the matrix resins 3 are similar to those of the first embodiment.

Similarly to the thread (string) shaped prepreg 1G shown in Fig. 10A, the prepreg 1H can be wound around the molding tool, the jig, or the like to be laminated and is suitable for being laminated on a complicated curved surface or the like.

Particularly, in the prepreg 1H, since the matrix resins 3 are knitted inside the fibrous reinforcing materials 2, the prepreg 1H is heated and the knitted matrix resins 3 are melted and cured at the same time.

For this reason, it is not necessary to laminate sheet-like resins, it is easier to handle than the prepreg in which the fibrous reinforcing materials 2 are impregnated into the matrix resins 3, and the lamination process can be greatly shortened.

In the prepreg 1I shown in Fig. 10C, the fibrous reinforcing materials 2 and the matrix resins 3 formed in linear shapes are knitted in cross shapes to be formed in a flexible woven fabric shape. The properties or the characteristics of the metal nanomaterials 4 added to the matrix resins 3 are similar to those of the first embodiment. The fibrous reinforcing materials 2 and the matrix resins 3 may be knitted to be formed in band shapes.

Similarly to the prepreg 1H shown in Fig. 10B, even in the case of the prepreg 1I, since the matrix resins 3 are knitted inside the fibrous reinforcing materials 2, the prepreg 1I is heated and the knitted matrix resins 3 are melted and cured at the same time. Accordingly, it is not necessary to laminate sheet-like resins and the lamination process can be greatly shortened.

The prepregs 1G, 1H, and 1I are formed in a thread shape (rope shape) and a woven fabric shape, and along with the sheet-shaped prepregs 1A to 1E in the first embodiment, by appropriately select prepregs according to the shape of the molding tool, the jig, or the like of the molded resin article, it is possible to mold molded resin articles having various shapes. In addition, in the prepregs 1A to 1I, since the metal nanomaterials 4 are included in the matrix resins 3, by irradiating the prepregs with electromagnetic waves, it is possible to cure the prepregs in a molded form.

As described above, according to the curing method of the present invention, by irradiating the resin composite material with the electromagnetic waves, it is possible to allow the resin composite material to self-heat to cure the resin composite material.

Accordingly, unlike the related art, it is not necessary to accommodate the prepregs in a storage type heater such as an autoclave and the storage type heater is not required. Therefore, it is possible to greatly simplify the heating equipment, save energy and, reduce the manufacturing costs of the molded resin article.

The present invention is not limited to the above-described embodiments, and modifications and improvements can be appropriately made within the scope of the claims.

For example, in the embodiments, the example is described, in which the present invention is applied to the prepreg in which the matrix resin is half-cured. However, the present invention can be applied to a resin composite material in which the matrix resin is in a fluid state.

In the embodiments, the metal nanomaterials 4 are self-heated by irradiating the metal nanomaterials 4 with the electromagnetic waves having a frequency range from 3 MHz to 3 GHz. However, it is confirmed that the metal nanomaterials 4 can be self-heated by applying even an electric field having a frequency lower than the frequency, for example, an electric field of approximately 20 Hz.

In this way, if the metal nanomaterials 4 are self-heated by applying an electric field having a lower frequency than that of the electromagnetic wave, since the configuration for applying the electric field is simpler than the configuration for emitting the electromagnetic waves, it is possible to simplify the heating equipment, which can contribute to reductions in the manufacturing costs of the molded resin article.

### Reference Signs List

- 1A to 1I:: prepreg (resin composite material)
- 2:: fibrous reinforcing material
- 3:: matrix resin
- 4:: metal nanomaterial
- 5:: resin sheet
- 6:: molding tool (jig)
- 7:: vacuum bag
- 8:: electromagnetic wave irradiation chamber
- 9:: electromagnetic wave irradiator
- EW:: electromagnetic wave
- S1:: lamination step
- S2:: electromagnetic wave irradiation step

## Claims

1. A curing method of a resin composite material (1A to 1I), comprising the steps of:
a lamination step (S1) of laminating a resin composite material (1A to 1I) on a molding tool (6);
an electromagnetic wave irradiation step (S2) of irradiating the resin composite material (1A to 1I) laminated on the molding tool (6) with electromagnetic waves (EW) to heat the resin composite material (1A to 1I); and
a pressurization step (S3) of pressurizing the surface of the heated resin composite material (1A to 1I),
wherein the resin composite material (1A to 1I) is formed by combining a fibrous reinforcing material (2) and a thermosetting or thermoplastic matrix resin (3),
wherein a metal nanomaterial (4) which absorbs electromagnetic waves (EW) and self-heats is added to the matrix resin (3),
wherein the metal nanomaterial (4) is nanofibers or nanocoils, and
wherein, in a case where the metal nanomaterial (4) is nanofibers, the nanofibers are manufactured using an electro-spinning method, or, in a case where the metal nanomaterial (4) is nanocoils, the nanocoils are obtained by setting nanofibers manufactured using an electro-spinning method as core portions and forming metal films on the surface of the nanofibers.

2. The curing method of a resin composite material (1A to 1I) according to claim 1, wherein the lamination step (S1) is performed a plurality of times, and the electromagnetic wave irradiation step (S2) is performed for each lamination step.

3. The curing method of a resin composite material (1A to 1I) according to claim 1 or 2, wherein frequencies of the electromagnetic waves (EW) are 3 MHz to 3 GHz.

4. The curing method of a resin composite material (1A to 1I) according to any one of claims 1 to 3, wherein the material of the metal nanomaterial (4) is platinum or gold.

5. The curing method of a resin composite material (1A to 1I) according to any one of claims 1 to 4, wherein the fibrous reinforcing material (2) is a planar shape in which fibers are woven to be arranged in one direction and the matrix resin (3) is attached to the fibrous reinforcing material (2) to form the resin composite material (1A to 1I) in a flexible sheet shape.

6. The curing method of a resin composite material (1A to 1I) according to any one of claims 1 to 4, wherein the fibrous reinforcing material (2) is a planar shape in which fibers are woven to be arranged in two directions and the matrix resin (3) is attached to the fibrous reinforcing material (2) to form the resin composite material (1A to 1I) in a flexible sheet shape.

7. The curing method of a resin composite material (1A to 1I) according to any one of claims 1 to 4, wherein the fibrous reinforcing material (2) is formed in a linear shape and the matrix resin (3) is attached to the fibrous reinforcing material (2) to form the resin composite material (1A to 1I) in a flexible thread shape.

8. The curing method of a resin composite material (1A to 1I) according to any one of claims 1 to 4, wherein the fibrous reinforcing material (2) and the matrix resin (3) are formed in a linear shape and the fibrous reinforcing material (2) and the matrix resin (3) are combined with each other to form the resin composite material (1A to 1I) in a flexible thread shape.

9. The curing method of a resin composite material (1A to 1I) according to any one of claims 1 to 4, wherein the fibrous reinforcing material (2) and the matrix resin (3) are formed in a linear shape and the fibrous reinforcing material (2) and the matrix resin (3) are knitted to each other to form the resin composite material (1A to 1I) in a flexible woven fabric shape.

## Patentansprüche

1. Verfahren zur Härtung eines Harzverbundmaterials (1A bis 1I), umfassend die Schritte:
einen Laminierungsschritt (S1) in Form des Laminierens eines Harzverbundmaterials (1A bis 1I) auf einem Formwerkzeug (6) ;
einen elektromagnetische Wellen nutzenden Bestrahlungsschritt (S2) in Form des Bestrahlens des auf dem Formwerkzeug (6) laminierten Harzverbundmaterials (1A bis 1I) mit elektromagnetischen Wellen (EW), um das Harzverbundmaterial (1A bis 1I) zu erwärmen; und
einen Druckbeaufschlagungsschritt (S3) in Form des Beaufschlagens der Oberfläche des erwärmten Harzverbundmaterials (1A bis 1I) mit Druck,
wobei das Harzverbundmaterial (1A bis 1I) durch Kombinieren eines faserförmigen Verstärkungsmaterials (2) mit einem duroplastischen oder thermoplastischen Matrixharz (3) ausgebildet wird,
wobei ein metallisches Nanomaterial (4), welches elektromagnetische Wellen (EW) absorbiert und sich selbst erwärmt, dem Matrixharz (3) hinzugefügt wird,
wobei es sich bei dem metallischen Nanomaterial (4) um Nanofasern oder Nanospulen handelt, und
wobei in einem Fall, in welchem es sich bei dem metallischen Nanomaterial (4) um Nanofasern handelt, die Nanofasern unter Verwendung eines Elektrospinnverfahrens hergestellt werden, oder in einem Fall, in welchem es sich bei dem metallischen Nanomaterial (4) um Nanospulen handelt, die Nanospulen dadurch erhalten werden, dass unter Verwendung eines Elektrospinnverfahrens hergestellte Nanofasern als Kernstücke festgelegt und Metallfilme auf der Oberfläche der Nanofasern ausgebildet werden.

2. Verfahren zur Härtung eines Harzverbundmaterials (1A bis 1I) gemäß Anspruch 1, wobei der Laminierungsschritt (S1) mehrmals durchgeführt wird und der elektromagnetische Wellen nutzende Bestrahlungsschritt (S2) im Rahmen eines jeden Laminierungsschritts durchgeführt wird.

3. Verfahren zur Härtung eines Harzverbundmaterials (1A bis 1I) gemäß Anspruch 1 oder 2, wobei die Frequenzen der elektromagnetischen Wellen (EW) 3 MHz bis 3 GHz betragen.

4. Verfahren zur Härtung eines Harzverbundmaterials (1A bis 1I) gemäß einem der Ansprüche 1 bis 3, wobei es sich bei dem Material des metallischen Nanomaterials (4) um Platin oder Gold handelt.

5. Verfahren zur Härtung eines Harzverbundmaterials (1A bis 1I) gemäß einem der Ansprüche 1 bis 4, wobei das faserförmige Verstärkungsmaterial (2) eine flächige Form aufweist, in welcher Fasern derart verwoben sind, dass sie in einer Richtung angeordnet sind, und das Matrixharz (3) mit dem faserförmigen Verstärkungsmaterial (2) derart verbunden ist, dass das Harzverbundmaterial (1A bis 1I) in Form einer flexiblen Lage vorliegt.

6. Verfahren zur Härtung eines Harzverbundmaterials (1A bis 1I) gemäß einem der Ansprüche 1 bis 4, wobei das faserförmige Verstärkungsmaterial (2) eine flächige Form aufweist, in welcher Fasern derart verwoben sind, dass sie in zwei Richtungen angeordnet sind, und das Matrixharz (3) mit dem faserförmigen Verstärkungsmaterial (2) derart verbunden ist, dass das Harzverbundmaterial (1A bis 1I) in Form einer flexiblen Lage vorliegt.

7. Verfahren zur Härtung eines Harzverbundmaterials (1A bis 1I) gemäß einem der Ansprüche 1 bis 4, wobei das faserförmige Verstärkungsmaterial (2) in linearer Form ausgebildet ist, und das Matrixharz (3) mit dem faserförmigen Verstärkungsmaterial (2) derart verbunden ist, dass das Harzverbundmaterial (1A bis 1I) in Form eines flexiblen Fadens vorliegt.

8. Verfahren zur Härtung eines Harzverbundmaterials (1A bis 1I) gemäß einem der Ansprüche 1 bis 4, wobei das faserförmige Verstärkungsmaterial (2) und das Matrixharz (3) in linearer Form ausgebildet sind, und das faserförmige Verstärkungsmaterial (2) und das Matrixharz (3) derart miteinander kombiniert sind, dass das Harzverbundmaterial (1A bis 1I) in Form eines flexiblen Fadens vorliegt.

9. Verfahren zur Härtung eines Harzverbundmaterials (1A bis 1I) gemäß einem der Ansprüche 1 bis 4, wobei das faserförmige Verstärkungsmaterial (2) und das Matrixharz (3) in linearer Form ausgebildet sind, und das faserförmige Verstärkungsmaterial (2) und das Matrixharz (3) derart miteinander verknüpft sind, dass das Harzverbundmaterial (1A bis 1I) in Form eines flexiblen Gewebes vorliegt.

## Revendications

1. Procédé de durcissement d'un matériau composite à base de résine (1A à 1I), comprenant les étapes consistant en :
une étape de stratification (S1) consistant à stratifier un matériau composite à base de résine (1A à 1I) sur un outil de moulage (6) ;
une étape d'exposition à des ondes électromagnétiques (S2) consistant à exposer le matériau composite à base de résine (1A à 1I) stratifié sur l'outil de moulage (6) à des ondes électromagnétiques (EW) pour chauffer le matériau composite à base de résine (1A à 1I) ; et
une étape de pressurisation (S3) consistant à pressuriser la surface du matériau composite à base de résine (1A à 1I) chauffé,
dans lequel le matériau composite à base de résine (1A à 1I) est formé en combinant un matériau de renforcement fibreux (2) et une résine matricielle thermodurcissable ou thermoplastique (3),
dans lequel un nanomatériau métallique (4) qui absorbe des ondes électromagnétiques (EW) et qui s'échauffe est ajouté à la résine matricielle (3),
dans lequel le nanomatériau métallique (4) est formé par des nanofibres ou des nanobobines, et
dans lequel, dans un cas où le nanomatériau métallique (4) est formé par des nanofibres, les nanofibres sont fabriquées en utilisant un procédé d'électrofilage, ou, dans un cas où le nanomatériau métallique (4) est formé par des nanobobines, les nanobobines sont obtenues en plaçant des nanofibres fabriquées en utilisant un procédé d'électrofilage en tant que parties d'âme et en formant des films métalliques sur la surface des nanofibres.

2. Procédé de durcissement d'un matériau composite à base de résine (1A à 1I) selon la revendication 1, dans lequel l'étape de stratification (S1) est réalisée une pluralité de fois, et l'étape d'exposition à des ondes électromagnétiques (S2) est réalisée pour chaque étape de stratification.

3. Procédé de durcissement d'un matériau composite à base de résine (1A à 1I) selon la revendication 1 ou 2, dans lequel des fréquences des ondes électromagnétiques (EW) sont de 3 MHz à 3 GHz.

4. Procédé de durcissement d'un matériau composite à base de résine (1A à 1I) selon l'une quelconque des revendications 1 à 3, dans lequel le matériau du nanomatériau métallique (4) est du platine ou de l'or.

5. Procédé de durcissement d'un matériau composite à base de résine (1A à 1I) selon l'une quelconque des revendications 1 à 4, dans lequel le matériau de renforcement fibreux (2) est une forme plane dans laquelle des fibres sont tissées pour être agencées dans une direction et la résine matricielle (3) est fixée au matériau de renforcement fibreux (2) pour former le matériau composite à base de résine (1A à 1I) sous une forme de feuille flexible.

6. Procédé de durcissement d'un matériau composite à base de résine (1A à 1I) selon l'une quelconque des revendications 1 à 4, dans lequel le matériau de renforcement fibreux (2) est une forme plane dans laquelle des fibres sont tissées pour être agencées dans deux directions et la résine matricielle (3) est fixée au matériau de renforcement fibreux (2) pour former le matériau composite à base de résine (1A à 1I) sous une forme de feuille flexible.

7. Procédé de durcissement d'un matériau composite à base de résine (1A à 1I) selon l'une quelconque des revendications 1 à 4, dans lequel le matériau de renforcement fibreux (2) est formé sous une forme linéaire et la résine matricielle (3) est fixée au matériau de renforcement fibreux (2) pour former le matériau composite à base de résine (1A à 1I) sous une forme de fil flexible.

8. Procédé de durcissement d'un matériau composite à base de résine (1A à 1I) selon l'une quelconque des revendications 1 à 4, dans lequel le matériau de renforcement fibreux (2) et la résine matricielle (3) sont formés sous une forme linéaire et le matériau de renforcement fibreux (2) et la résine matricielle (3) sont combinés l'un avec l'autre pour former le matériau composite à base de résine (1A à 1I) sous une forme de fil flexible.

9. Procédé de durcissement d'un matériau composite à base de résine (1A à 1I) selon l'une quelconque des revendications 1 à 4, dans lequel le matériau de renforcement fibreux (2) et la résine matricielle (3) sont formés sous une forme linéaire et le matériau de renforcement fibreux (2) et la résine matricielle (3) sont tricotés l'un avec l'autre pour former le matériau composite à base de résine (1A à 1I) sous une forme de tissu flexible.
